# DEMANDE DE BREVET EUROPEEN

(11) **EP 2 477 115 A1**
(43) Date de publication de la demande: **18.07.2012**
(21) Numéro de dépôt: 09290649.4
(22) Date de dépôt: 27.08.2009
(51) Int. Cl.: G06F 11/20, G06F 11/14

(54) **Procédé et dispositif d'encapsulation d'applications dans un systéme informatique pour aéronef**

(30) Priorité: 15.09.2008 FR 0856193
(71) Demandeur: AIRBUS OPERATIONS, 31060 Toulouse (FR)
(72) Inventeur: Beltrand Francois, 31270 Villeneuve Tolosane (FR)
(74) Mandataire: Imbert de Tremiolles, Ghislain

(57) **Abrégé**

L'invention a notamment pour objet un dispositif pour l'exécution d'applications (510) dans un système informatique (500) d'aéronef permettant l'exécution simultanée d'au moins deux applications distinctes, ledit système informatique comprenant des ressources de calcul et de stockage partagées. Le dispositif comprend des moyens logiciels de ségrégation adaptés à créer au moins deux environnements informatiques (505) distincts, une partition desdites ressources de calcul et de stockage étant allouée à chacun desdits au moins deux environnements de telle sorte que l'exécution de l'une des desdites au moins deux applications dans un desdits au moins deux environnements n'a pas d'effet sur l'exécution de l'autre desdites au moins deux applications exécutée dans l'autre desdits au moins deux environnements. L'invention a également pour objet un procédé pour mettre en oeuvre un tel dispositif.

## Description

La présente invention concerne les applications logicielles embarquées dans des calculateurs d'aéronefs et plus particulièrement un procédé et un dispositif d'encapsulation d'applications dans un système informatique pour aéronef permettant la ségrégation des applications.

De façon générale, les aéronefs modernes comprennent des systèmes informatiques embarqués ayant notamment pour objet des fonctions liées à l'avionique telles que la navigation. Pour des raisons de sécurité, ces applications, généralement programmées dans des langages comme l'assembleur ou le C, sont certifiées. De plus, l'échange de données entre ces applications et d'autres systèmes, par exemple des systèmes au sol, est protégé.

Cependant, pour répondre à des besoins croissants tels que l'optimisation des opérations de maintenance et de l'exploitation des aéronefs, des applications spécifiques, n'interférant pas directement avec le pilotage des aéronefs, ont été développées. Néanmoins, de telles applications sont généralement implémentées sur des systèmes distincts de l'avionique de telle sorte qu'une défaillance de ces applications n'ait pas de conséquence sur la sécurité des aéronefs. Ces systèmes sont dits ouverts, car ils permettent aux compagnies aériennes exploitant les aéronefs d'installer leurs propres applications qui peuvent être des applications de type Java (Java est une marque) ou Web du monde IT (sigle d'*Information Technology* en terminologie anglo-saxonne).

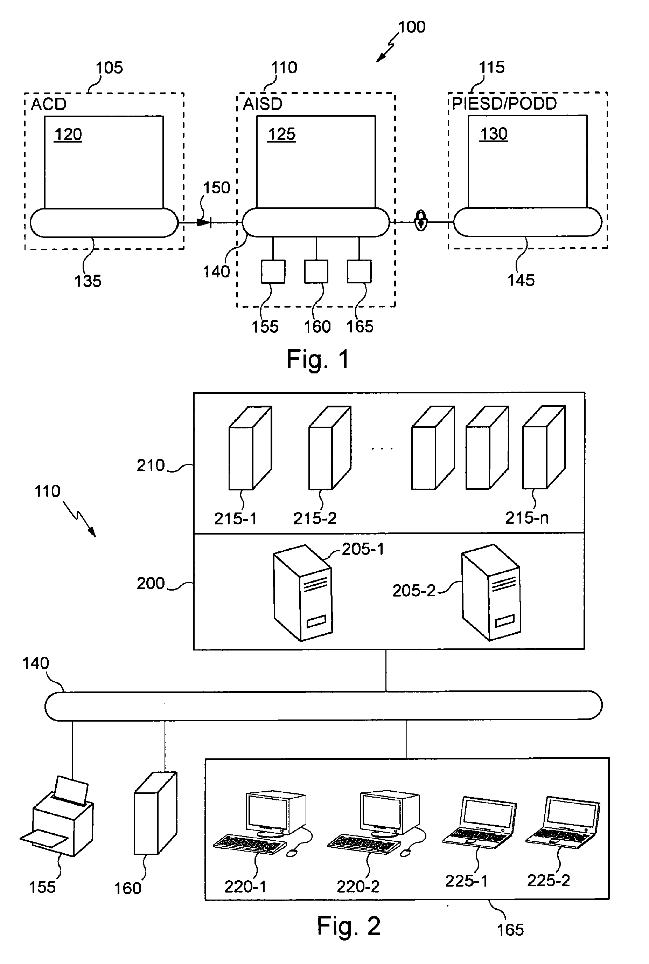

La figure 1 illustre schématiquement un exemple d'architecture informatique pouvant être mise en oeuvre dans un aéronef. Comme illustré, l'architecture 100 comprend ici un domaine avionique 105, appelé *Aircraft Control Domain* (ACD) en terminologie anglo-saxonne, un domaine de services de la compagnie aérienne 110, appelé *Airline Information Service Domain* (AISD) en terminologie anglo-saxonne, et un domaine passager 115 comprenant les domaines appelés *Passenger Information and Entertainment Service Domain* (PIESD) et *Passenger Owned Devices Domain* (PODD) en terminologie anglo-saxonne.

Chacun des domaines 105, 110 et 115 comprend les systèmes informatiques 120, 125 et 130, respectivement, constitués, par exemple, d'un ou de plusieurs calculateurs ou serveurs.

Le domaine avionique 105 comprend le réseau fermé 135 tandis que le domaine de services de la compagnie aérienne 110, appelé domaine service compagnie dans la suite de la description, et le domaine passager 115 comprennent les réseaux privé 140 et public 145, respectivement. Les réseaux fermé 135 et privé 140 sont reliés par une diode 150 de telle sorte que des données puissent être transmises du réseau fermé 135 au réseau privé 140 mais que des données ne puissent pas être transmises du réseau privé 140 au réseau fermé 135. Par ailleurs, il existe une passerelle sécurisée entre les réseaux privé 140 et public 145 pour permettre l'échange de données entre ces réseaux, sous réserve d'autorisation.

Des dispositifs d'impression 155, de communication 160 et d'affichage 165, appartenant au domaine service compagnie 110, sont ici reliés au réseau privé 140.

Le domaine service compagnie 110 permet notamment à la compagnie aérienne exploitant l'aéronef d'échanger des données avec ce dernier. De telles données sont par exemple des données de maintenance transmises par l'aéronef à sa compagnie aérienne pour lui permettre de planifier des opérations de maintenance alors même que l'aéronef est en vol. Ces données peuvent également concerner des instructions ou des indications météorologiques transmises par la compagnie aérienne à l'aéronef.

Les applications mises en oeuvre dans le domaine service compagnie 110 sont souvent issues du monde libre, c'est-à-dire qu'elles sont basées sur des éléments de codes qui n'ont pas été nécessairement contrôlés et qui sont donc potentiellement sujet à des défaillances. De telles défaillances peuvent conduire à l'indisponibilité de l'application en cause, à la perturbation d'autres applications du domaine service compagnie et/ou à la défaillance du domaine lui-même.

Pour pallier de telles situations, le domaine service compagnie est généralement basé sur un système redondant comprenant deux calculateurs appelés SPU (sigle de *Server Process Unit* en terminologie anglo-saxonne). Cependant, si cette solution permet d'améliorer la fiabilité du domaine service compagnie, son efficacité est limitée, notamment lorsqu'une défaillance d'une application a pour effet la perturbation d'autres applications.

L'invention permet de résoudre au moins un des problèmes exposés précédemment.

L'invention a ainsi pour objet un dispositif pour l'exécution d'applications dans un système informatique d'aéronef permettant l'exécution simultanée d'au moins deux applications distinctes, ledit système informatique comprenant des ressources de calcul et de stockage partagées, ce dispositif comprenant des moyens logiciels de ségrégation adaptés à créer au moins deux environnements informatiques distincts, une partition desdites ressources de calcul et de stockage étant allouée à chacun desdits au moins deux environnements de telle sorte que l'exécution de l'une des desdites au moins deux applications dans un desdits au moins deux environnements est indépendante de l'exécution de l'autre desdites au moins deux applications exécutée dans l'autre desdits au moins deux environnements.

Le dispositif selon l'invention permet ainsi de ségréger les applications exécutées dans un système informatique d'aéronef, en particulier dans un système informatique dit ouvert, pour limiter les effets de la défaillance d'une application sur une autre application.

De façon avantageuse, le dispositif comprend en outre des moyens de contrôle adaptés à détecter une défaillance dudit système informatique, d'au moins l'un desdits au moins deux environnements et/ou d'au moins l'une desdites au moins deux applications. Le dispositif selon l'invention est ainsi capable de surveiller l'exécution des applications et, lorsqu'une défaillance est détectée, de décider ce qu'il convient de faire en réponse à cette défaillance, par exemple, réinitialiser et/ou relancer l'application défaillante. Lesdits moyens de contrôle sont ainsi, de préférence, adaptés à stopper et à lancer chacune desdites au moins deux applications. De même, lesdits moyens de contrôle sont, de préférence, adaptés à stopper et à mettre en oeuvre chacun desdits au moins deux environnements pour réinitialiser l'un ou les deux environnements.

Selon un mode de réalisation particulier, lesdits moyens de contrôle comprennent en outre des moyens pour échanger des données avec des moyens de contrôle équivalents d'un système informatique, appelé second système informatique, distinct dudit système informatique, appelé premier système informatique, pour mettre en oeuvre au moins un environnement dudit second système informatique et pour exécuter au moins une application dudit second système informatique.

Le dispositif selon l'invention permet ainsi, notamment, de mettre en oeuvre un mode de fonctionnement dégradé lorsqu'une défaillance perturbe le fonctionnement d'un second système informatique afin de permettre l'exécution d'une ou de plusieurs applications exécutées sur ce système informatique sur le premier système informatique.

De façon avantageuse, le dispositif comprend en outre des moyens pour détecter la défaillance dudit second système informatique et des moyens de gestion de priorité d'applications adaptés à configurer ledit premier système informatique lorsqu'une défaillance est détectée dans ledit second système informatique de telle sorte que les applications ayant les niveaux de priorité les plus élevés desdits premier et second systèmes informatiques soient exécutées dans ledit premier système informatique.

Selon un mode de réalisation particulier, le dispositif comprend en outre des moyens pour l'affichage de données issues de l'une desdites au moins deux applications, lesdits moyens pour l'affichage de données comprenant un logiciel graphique de type client adapté à transmettre des requêtes d'affichage. Le dispositif selon l'invention permet ainsi de déporter l'affichage des informations relatives aux applications exécutées.

Toujours selon un mode de réalisation particulier, le dispositif comprend en outre des moyens de communication, lesdits moyens de communication étant partagés entre lesdits au moins deux environnements pour permettre la réception ou la transmission depuis ou vers un dispositif extérieur audit aéronef.

De façon avantageuse, chacun desdits au moins deux environnements utilise son propre système d'exploitation.

L'invention a également pour objet un procédé pour mettre le oeuvre le dispositif décrit précédemment.

D'autres avantages, buts et caractéristiques de la présente invention ressortent de la description détaillée qui suit, faite à titre d'exemple non limitatif, au regard des dessins annexés dans lesquels :
- la figure 1 représente schématiquement un exemple d'architecture informatique pouvant être mise en oeuvre dans un aéronef ;
- la figure 2 illustre schématiquement un exemple d'architecture informatique d'un domaine de services de la compagnie aérienne, dans un aéronef, conformément à l'invention ;
- la figure 3 présente l'empilement des couches logicielles sur la couche matérielle d'un SPU du domaine de services de la compagnie aérienne ;
- la figure 4 illustre un exemple d'architecture logicielle offrant des fonctions d'affichage graphique aux applications exécutées dans des VPUs ;
- la figure 5 illustre schématiquement le rôle des contrôleurs de services logiciels d'aide à l'administration des SPUs, des VPUs et des applications ;
- la figure 6 présente certaines étapes d'un exemple de procédé pour mettre en oeuvre l'invention ; et,
- la figure 7 illustre un exemple d'architecture matérielle d'un SPU.

De façon générale, l'invention a pour objet une architecture informatique du domaine de services d'une compagnie aérienne, dans un aéronef, permettant la ségrégation des applications exécutées dans celui-ci. La ségrégation est ici réalisée de façon logicielle selon un mécanisme de virtualisation à l'aide, par exemple, de l'application Xen développée par l'université de Cambridge au Royaume-Uni.

Un mécanisme de virtualisation permet de créer plusieurs machines virtuelles à partir d'une ou de plusieurs machines réelles. Chaque machine virtuelle utilise son propre système d'exploitation. La couche logicielle offrant le mécanisme de virtualisation, généralement appelée un hyperviseur, peut être intégrée au système d'exploitation de la machine réelle ou implémentée sous forme de couche additionnelle.

L'hyperviseur est responsable du partage des ressources de la machine réelle et de l'application des règles de contrôle d'accès aux ressources. Les ressources partagées entre les machines virtuelles sont, par exemple, la puissance de calcul CPU (sigle de *Central Processing Unit* en terminologie anglo-saxonne), les canaux de communication, les interruptions matérielles et logicielles, les ports d'entrées/sorties, la mémoire, les horloges, les bus systèmes, les contrôleurs et/ou la mémoire de masse.

La figure 2 illustre schématiquement un exemple d'architecture informatique d'un domaine de services d'une compagnie aérienne 110, dans un aéronef, conformément à l'invention. Le domaine de services d'une compagnie aérienne 110, appelé domaine service compagnie, comprend une infrastructure physique 200 basée ici sur deux calculateurs 205-1 et 205-2 de type SPU. Les SPU 205-1 et 205-2 sont redondants, c'est-à-dire que les mêmes applications peuvent être exécutées sur chacun d'eux, l'un étant primaire, l'autre secondaire. Il convient néanmoins de remarquer que la mise en oeuvre de l'invention n'est pas limitée par le nombre de calculateurs.

Chaque SPU est ici adapté à supporter des containers 215-1 à 215-n, c'est-à-dire des entités logiques comprenant un environnement d'exécution, un système d'exploitation et des applications. L'environnement d'exécution correspond essentiellement à des moyens de communication, des interfaces d'entrées/sorties, de la mémoire et une puissance de calcul. Les containers, aussi appelés VPUs (sigle de *Virtual Process Unit* en terminologie anglo-saxonne), sont indépendants les uns des autres de telle sorte que si une défaillance affecte l'un d'eux, ou une application exécutée dans l'un d'eux, les autres ne sont pas perturbés.

L'infrastructure physique 200 est reliée au réseau privé 140 auquel sont également reliés une imprimante 155, une interface de communication 160, par exemple une interface de communication par satellite, et des dispositifs d'affichage 165. Les dispositifs d'affichage sont ici fixes ou mobiles, par exemple du type FPU et MPU (sigles de *Fixed Process Unit* et *Mobile Process Unit* en terminologie anglo-saxonne). Bien que seuls deux FPU 220-1 et 220-2 ainsi que deux MPU 225-1 et 225-2 soient représentés, ces nombres ne sont pas limitatifs.

Les FPU et les MPU peuvent ici être considérés comme des micro-ordinateurs de type PC (sigle de *Personal Computer* en terminologie anglo-saxonne). Cependant, les données issues des applications exécutées dans les SPUs peuvent également être affichées sur un simple écran relié aux SPUs, directement ou via un commutateur permettant de commuter la source des données entre les SPUs et d'autres sources.

Le concept de VPU permet d'offrir, aux développeurs, des systèmes virtuels formant des environnements dans lesquels les applications peuvent être développées, testées et exécutées sans que ces applications ne soient perturbées par l'exécution d'autres applications.

Chaque VPU a, de préférence, une adresse réseau qui lui est propre. Cependant, une ségrégation réseau ne pouvant être proposée dans un environnement de type Ethernet, il convient de mettre en oeuvre des fonctions de qualité de services, appelées *quality of service* en terminologie anglo-saxonne, pour accéder aux ressources réseau.

L'installation des applications dans chaque VPU est de préférence réalisée conformément au standard ARINC 665.

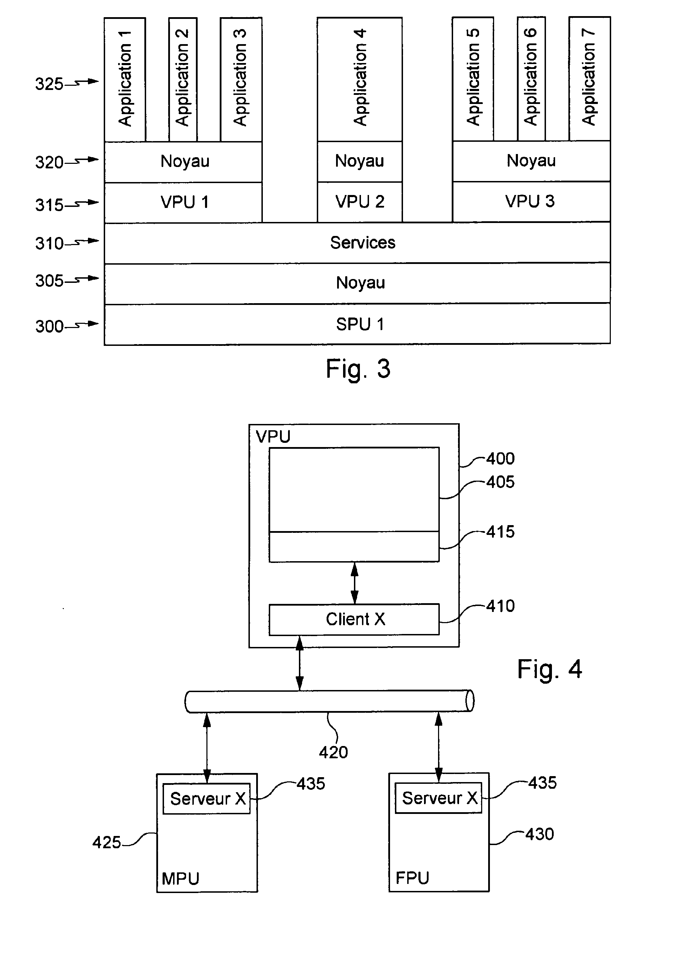

La figure 3 illustre plus précisément l'empilement des couches logicielles sur la couche matérielle d'un SPU d'un domaine service compagnie.

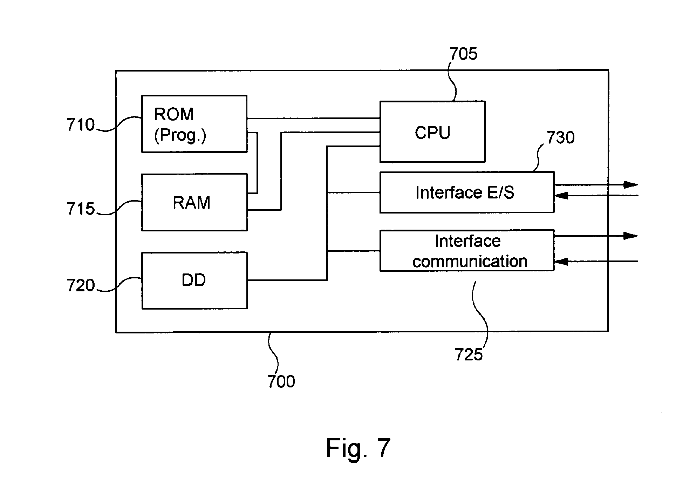

La couche 300 représente ici la couche matérielle d'un SPU, appelé SPU 1. La couche matérielle comprend par exemple un microprocesseur, de la mémoire (mémoire morte, mémoire de travail et mémoire de masse), une interface d'entrée/sortie de type clavier, une interface réseau. La figure 7 illustre un exemple de la couche matérielle 300.

Sur la couche matérielle 300 se trouve une première couche logicielle 305 formant le noyau logiciel du SPU. Cette couche comprend notamment le système d'exploitation du SPU, les pilotes de matériel aussi appelé *hardware drivers* en terminologie anglo-saxonne ainsi que la couche réseau permettant l'échange de données entre le SPU et un système externe.

Sur la couche 305 se trouve la couche de services logiciels 310, ou couche de services basiques, adaptés, notamment, à tenir un journal d'activité (appelé log en terminologie anglo-saxonne), à gérer les paramètres propres à l'aéronef utilisés par les applications de service compagnie et à échanger des données entre ces applications et/ou entre ces applications et des systèmes externes. Il s'agit essentiellement de services basiques fournis aux applications.

La couche de virtualisation 315 permet de créer les containers (VPUs) pour ségréger en particulier la puissance de calcul du SPU, son espace mémoire et sa mémoire de masse. Ainsi, les applications exécutées dans un VPU sont indépendantes des applications exécutées dans d'autres VPUs.

Chaque VPU met de préférence en oeuvre un système d'exploitation indépendant (couche 320) permettant d'exécuter des applications (couche 325) de façon distincte et indépendante. Chaque application exécutée dans un VPU peut accéder aux services du SPU (couche 310) à travers des interfaces réseau et d'entrées/sorties. L'interface utilisée par les applications est de préférence standard, par exemple de type POSIX (sigle de *Portable Operating System Interface,* pour Unix, en terminologie anglo-saxonne).

Des fonctions d'affichage graphique telles que des GUIs (sigle de *Graphical User Interface* en terminologie anglo-saxonne) peuvent être mises en oeuvre en utilisant, par exemple, le mécanisme appelé X11. Selon ce mécanisme, utilisant le modèle client/serveur, un client X transmet des requêtes d'affichage et d'interaction de type clavier/souris sur un port logiciel à un serveur X en utilisant le protocole X et une bibliothèque X.

La figure 4 illustre un exemple d'architecture logicielle offrant des fonctions d'affichage graphique aux applications exécutées dans des VPUs. Le VPU 400 comprend ici plusieurs applications 405 pouvant échanger des données avec un client X 410 via une interface graphique 415. Le SPU (non représenté) mettant en oeuvre le VPU 400 est connecté au réseau privé 420 auquel sont également connectés le MPU 425 et le FPU 430 comprenant chacun un serveur X 435 et 440, respectivement. Les librairies graphiques mises en oeuvre dans le VPU 400, le MPU 425 et le FPU 430 sont compatibles (les versions sont de préférence les mêmes).

Ainsi, lorsqu'une application exécutée sur le VPU 400 transmet une requête d'interaction au serveur X 435 ou 440, un utilisateur du MPU 425 ou du FPU 430 peut interagir avec l'application à l'aide d'un clavier, d'une souris ou d'un dispositif équivalent relié au MPU 425 ou au FPU 430. En réponse, le serveur X 435 ou 440 sert la requête au client X 410 via l'interface graphique 415 en transmettant les commandes de l'utilisateur. De la même façon, l'application peut transmettre des données graphiques au MPU 425 ou au FPU 430 via l'interface graphique 415, le client X 410 et le serveur X 435 ou 440.

De cette façon, il n'est pas nécessaire de développer du code spécifique pour le MPU 425 et le FPU 430.

Un contrôleur de services logiciels (couche 310) est utilisé pour surveiller chaque SPU, en particulier pour détecter des états selon lesquels le SPU, un ou plusieurs VPUs et/ou une ou plusieurs applications fonctionnent en mode dégradé. Ce contrôleur offre de préférence les fonctionnalités suivantes,
- détection de l'état du SPU ;
- allocation, lancement et arrêt d'un VPU ;
- détection de l'état d'un VPU ;
- allocation, lancement et arrêt d'une application ; et,
- détection de l'état d'une application.

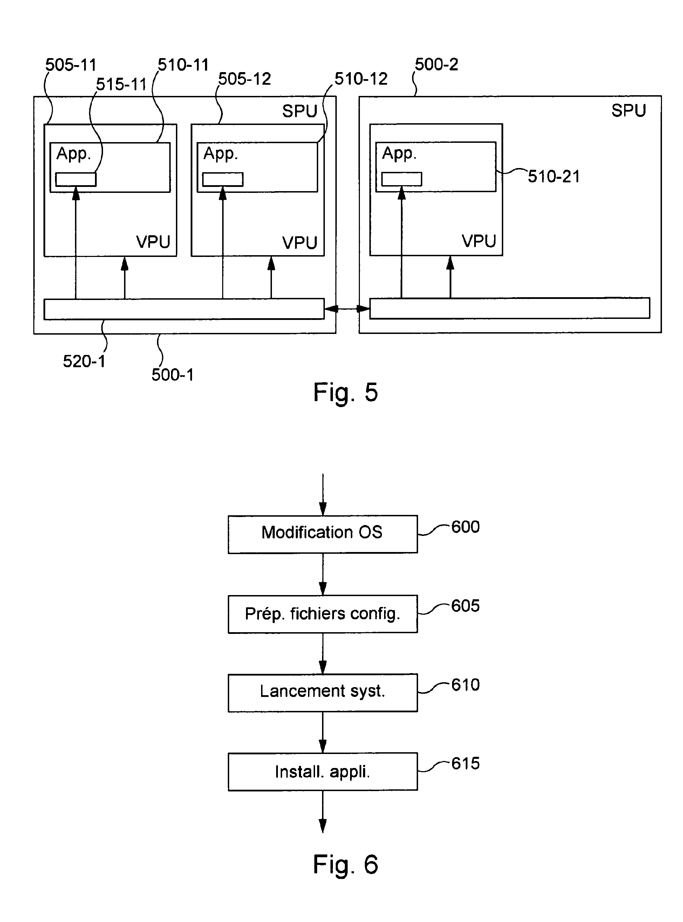

La figure 5 illustre schématiquement le rôle de contrôleurs de services logiciels contribuant à l'administration de deux SPUs, des VPUs créés dans les SPUs et des applications exécutées dans les VPUs créés. Les contrôleurs de services logiciels contribuent également à l'administration des rôles des deux SPUs fonctionnant de façon redondante, l'un étant un SPU primaire, l'autre un secondaire, le primaire ayant la priorité sur le secondaire.

Les SPUs 500-1 et 500-2 ayant une architecture similaire, seule l'architecture du SPU 500-1 est présentée ici.

Le SPU 500-1 comprend plusieurs VPUs, ici les VPUs 505-11 et 505-12, chaque VPU permettant l'exécution d'une ou de plusieurs applications.

Un script de contrôle ou une interface de contrôle est de préférence associé à chaque application pour indiquer l'état de l'application auquel il est associé au contrôleur de service logiciel. Par exemple, le VPU 505-11 permet l'exécution de l'application 510-11 à laquelle est associé le script de contrôle ou l'interface de contrôle 515-11.

Le contrôleur de service logiciel 520-1 du SPU 500-1 est relié à chacun des VPUs qu'il met en oeuvre, VPUs 505-11 et 505-12, ainsi qu'à chaque script de contrôle ou interface de contrôle des applications exécutées dans ces VPUs (en particulier le script de contrôle ou l'interface de contrôle 515-11).

Le contrôleur de service logiciel 520-1 est ainsi capable de déterminer l'état du SPU 500-1, des VPUs 505-11 et 505-12 ainsi que des applications exécutées dans ces VPUs.

Le contrôleur de service logiciel 520-1 du SPU 500-1 est en outre ici relié au contrôleur de service logiciel 520-2 du SPU 500-2 pour permettre une reconfiguration des VPUs et des applications exécutées si une défaillance est détectée dans un SPU.

Une telle reconfiguration peut être mise en oeuvre, par exemple, à partir d'un diagramme d'état. A titre d'illustration, si un SPU subit une panne, l'autre SPU devient le SPU primaire (s'il était secondaire). Il arrête et/ou lance des VPUs prédéterminés pour exécuter les applications les plus importantes et permettre le fonctionnement du domaine service compagnie en mode dégradé. Le choix des VPUs et des applications du mode dégradé est prédéterminé, il peut notamment dépendre du type de défaillance et de certaines conditions externes telles que la phase de vol.

Selon un mode de réalisation particulier, chaque contrôleur de service logiciel utilise un fichier de configuration prédéterminé contenant notamment des indications relatives à un mode de fonctionnement normal pour lequel les VPUs sont répartis dans les SPUs et à un mode de fonctionnement dégradé selon lequel un SPU est défaillant et les VPUs activés sont déterminés selon la priorité des applications exécutées.

Lorsqu'un SPU est défaillant, par exemple le SPU primaire, le SPU restant, c'est-à-dire le SPU secondaire, change de rôle et devient le SPU primaire. Il stoppe les VPUs qu'il avait mis en oeuvre correspondant aux applications de faibles priorités pour lancer les VPUs, précédemment mis en oeuvre sur le SPU défaillant, en charge d'exécuter les applications ayant les plus hautes priorités.

Cette gestion des VPUs est de préférence transparente pour les applications exécutées.

A titre d'illustration, si les applications 510-12 et 510-21 ont une haute priorité, si l'application 510-11 a une basse priorité et si le SPU 500-2 est défaillant, le VPU 505-11 sera stoppé et remplacé par un VPU permettant d'exécuter l'application 510-21 dans le SPU 500-1.

Chaque SPU comporte avantageusement une partition de sauvegarde à partir de laquelle le système d'exploitation peut être réinstallé suite à une défaillance ou pour mettre à jour le système. Les paramètres des VPUs et des applications sont, de préférence, stockés dans une partition de sauvegarde distincte de façon à ce qu'il ne soit pas nécessaire de réinstaller les VPUs et les applications après la réinstallation du système d'exploitation du SPU.

La configuration de l'hyperviseur, pour adapter les machines virtuelles aux besoins des applications exécutées, peut être réalisée de façon dynamique ou statique par un mécanisme de chargement de données de configuration.

La mise en oeuvre de l'invention peut être décomposée en quatre étapes distinctes, comme illustré sur la figure 6.

Une première étape (étape 600) a pour objet de modifier, d'adapter ou d'installer un système d'exploitation, sur chaque SPU, pour permettre la mise en oeuvre de VPUs. Cette étape peut consister, par exemple, à patcher le système d'exploitation avec l'application Xen, c'est-à-dire à installer un programme modificatif sur le système d'exploitation installé pour étendre ses fonctions.

Une étape suivante (étape 605) a pour objet de préparer les fichiers de configuration utilisés notamment pour définir les VPUs en indiquant, pour chacun d'eux, les paramètres nécessaires à leur mise en oeuvre. Ces paramètres sont, par exemple, la puissance de calcul, la quantité de mémoire, la qualité de service réseau et le nombre de ports.

Ces paramètres peuvent notamment être déterminés par calculs ou par analyse statistique. Ils peuvent être modifiés de façon dynamique ou statique.

Ensuite, après avoir lancé le système (étape 610), c'est-à-dire démarré les SPUs et mis en place les VPUs, il est possible d'installer les applications devant être exécutées (étape 615). Les applications sont par exemple installées selon le standard ARINC 665.

La figure 7 illustre un exemple d'architecture matérielle d'un SPU 700 qui comporte ici un bus de communication auquel sont reliées :
- une unité centrale de traitement ou microprocesseur 705 ;
- une mémoire morte 710 (ROM, acronyme de *Read Only Memory* en terminologie anglo-saxonne) pouvant comporter les programmes à exécuter ("Prog") ;
- une mémoire de travail 715 (RAM, acronyme de *Random Access Memory* en terminologie anglo-saxonne), aussi appelée mémoire vive ou mémoire cache, comportant des registres adaptés à enregistrer des variables et paramètres créés et modifiés au cours de l'exécution des programmes précités ;
- une mémoire de masse 720 telle qu'un disque dur pouvant comporter les programmes "Prog" précités et des données traitées ou à traiter selon l'invention ;
- une interface de communication 725 adaptée à transmettre et à recevoir des données ; et,
- une interface d'entrées/sorties 730.

Le bus de communication permet la communication et l'interopérabilité entre les différents éléments inclus dans le dispositif 700 ou reliés à lui. La représentation du bus n'est pas limitative et, notamment, l'unité centrale est susceptible de communiquer des instructions à tout élément du dispositif 700 directement ou par l'intermédiaire d'un autre élément du dispositif 700.

Le code exécutable de chaque programme permettant au dispositif programmable de mettre en oeuvre les processus selon l'invention, peut être stocké, par exemple, dans le disque dur 720 ou en mémoire morte 710.

Selon une autre variante, le code exécutable des programmes pourra être reçu, au moins partiellement, par l'intermédiaire de l'interface 725, pour être stocké de façon identique à celle décrite précédemment.

De manière plus générale, le ou les programmes pourront être chargés dans un des moyens de stockage fixe ou amovible du dispositif 700 avant d'être exécutés.

L'unité centrale 705 va commander et diriger l'exécution des instructions ou portions de code logiciel du ou des programmes selon l'invention, instructions qui sont stockées dans le disque dur 720 ou dans la mémoire morte 710 ou bien dans les autres éléments de stockage précités. Lors de la mise sous tension, le ou les programmes qui sont stockés dans une mémoire non volatile, par exemple le disque dur 720 ou la mémoire morte 710, sont transférés dans la mémoire vive 715 qui contient alors le code exécutable du ou des programmes selon l'invention, ainsi que des registres pour mémoriser les variables et paramètres nécessaires à la mise en oeuvre de l'invention.

Naturellement, pour satisfaire des besoins spécifiques, une personne compétente dans le domaine de l'invention pourra appliquer des modifications dans la description précédente.

## Revendications

1. Dispositif pour l'exécution d'applications (325, 405, 510) dans un système informatique (205, 300, 500) d'aéronef permettant l'exécution simultanée d'au moins deux applications distinctes, ledit système informatique comprenant des ressources de calcul et de stockage partagées, ce dispositif étant **caractérisé en ce qu'**il comprend des moyens logiciels de ségrégation adaptés à créer au moins deux environnements informatiques (215, 315, 400, 505) distincts, une partition desdites ressources de calcul et de stockage étant allouée à chacun desdits au moins deux environnements de telle sorte que l'exécution de l'une des desdites au moins deux applications dans un desdits au moins deux environnements est indépendante de l'exécution de l'autre desdites au moins deux applications exécutée dans l'autre desdits au moins deux environnements, le dispositif comprenant en outre des moyens de contrôle (515, 520) adaptés à détecter une défaillance dudit système informatique, d'au moins l'un desdits au moins deux environnements et d'au moins l'une desdites au moins deux applications.

2. Dispositif selon la revendication précédente selon lequel lesdits moyens de contrôle sont adaptés à stopper et à lancer chacune desdites au moins deux applications.

3. Dispositif selon la revendication 1 ou la revendication 2 selon lequel lesdits moyens de contrôle sont adaptés à stopper et à mettre en oeuvre chacun desdits au moins deux environnements.

4. Dispositif selon l'une quelconque des revendications 1 à 3 selon lequel lesdits moyens de contrôle comprennent en outre des moyens pour échanger des données avec des moyens de contrôle équivalents d'un système informatique, appelé second système informatique, distinct dudit système informatique, appelé premier système informatique, pour mettre en oeuvre au moins un environnement dudit second système informatique et pour exécuter au moins une application dudit second système informatique.

5. Dispositif selon la revendication précédente comprenant en outre des moyens pour détecter la défaillance dudit second système informatique et des moyens de gestion de priorité d'applications adaptés à configurer ledit premier système informatique lorsqu'une défaillance est détectée dans ledit second système informatique de telle sorte que les applications ayant les niveaux de priorité les plus élevés desdits premier et second systèmes informatiques soient exécutées dans ledit premier système informatique.

6. Dispositif selon la revendication précédente selon lequel lesdits moyens de gestion de priorité utilisent un diagramme d'état.

7. Dispositif selon l'une quelconque des revendications précédentes comprenant en outre des moyens (410) pour l'affichage de données issues de l'une desdites au moins deux applications, lesdits moyens pour l'affichage de données comprenant un logiciel graphique de type client adapté à transmettre des requêtes d'affichage.

8. Dispositif selon l'une quelconque des revendications précédentes comprenant en outre des moyens de communication, lesdits moyens de communication étant partagés entre lesdits au moins deux environnements pour permettre la réception ou la transmission depuis ou vers un dispositif extérieur audit aéronef.

9. Dispositif selon l'une quelconque des revendications précédentes selon lequel chacun desdits au moins deux environnements utilise son propre système d'exploitation.

10. Procédé pour exécuter des applications (325, 405, 510) dans un système informatique (205, 300, 500) d'aéronef permettant l'exécution simultanée d'au moins deux applications distinctes, le procédé comprenant des étapes pour contrôler chacune des moyens du dispositif selon l'une quelconque des revendications précédentes.
